# FASCICULE DE BREVET EUROPEEN

(11) **EP 3 382 210 B1**
(45) Date de publication et mention de la délivrance du brevet: **01.04.2020**
(21) Numéro de dépôt: 18155831.3
(22) Date de dépôt: 08.02.2018
(51) Int. Cl.: F04D 29/56, F01D 17/16, F16C 32/04

(54) **AUBE À CALAGE VARIABLE DE TURBOMACHINE, VIROLE DE TURBOMACHINE, SYSTÈME D'AUBES À CALAGE VARIABLE, COMPRESSEUR ET TURBOMACHINE ASSOCIÉS**
VERSTELLBARE SCHAUFEL EINER STRÖMUNGSMASCHINE, ZUGEHÖRIGES DECKBAND EINER STRÖMUNGSMASCHINE, VERSTELLBARES SCHAUFELSYSTEM, VERDICHTER UND STRÖMUNGSMASCHINE
VARIABLE-PITCH VANE OF A TURBOMACHINE, CORRESPONDING TURBOMACHINE SHROUD, VARIABLE-PITCH BLADE SYSTEM, COMPRESSOR AND TURBOMACHINE

(30) Priorité: 27.03.2017 BE 201705203
(43) Date de publication de la demande: 03.10.2018
(73) Titulaire: Safran Aero Boosters SA, 4041 Herstal (BE)
(72) Inventeur: VALLINO, Frédéric, 4100 Seraing (BE)
(74) Mandataire: Lecomte & Partners

(56) Documents cités:
- EP-A2- 0 527 593
- EP-A2- 2 574 733
- JP-A- 2014 077 423
- US-A1- 2010 166 540
- US-A1- 2014 286 745
- US-A1- 2016 010 486
- US-A1- 2016 017 744

## Description

### Domaine technique

L'invention se rapporte aux aubes à calage variable pour une turbomachine. L'invention concerne une telle aube ou une virole de turbomachine munie d'un orifice pour recevoir l'aube. L'invention a également trait à une turbomachine axiale, notamment un turboréacteur d'avion ou un turbopropulseur d'aéronef, munie d'aubes à calage variable.

### Technique antérieure

Il est connu de prévoir plusieurs rangées d'aubes orientables par rapport au carter d'un compresseur de turboréacteur. De telles aubes peuvent être pivotées pendant le fonctionnement du moteur. Leurs pales cambrées basculent par rapport au flux primaire qu'elles traversent, ce qui permet d'adapter leur action en fonction du régime moteur et des conditions de vol. La plage de fonctionnement est ainsi étendue.

Généralement, ces aubes sont dotées de tiges de commandes montées pivotantes dans des ouvertures traversant le carter externe du compresseur. Les extrémités libres des tiges de commandes sont prolongées latéralement par des leviers de commandes, eux-mêmes reliées à une bague de commande. Des actionneurs permettent d'entraîner en rotation les bagues pour incliner les leviers, et ainsi orienter les aubes. Le pilotage des actionneurs peut s'effectuer en fonction de capteurs, ou de différents paramètres de fonctionnement de la turbomachine.

La performance du compresseur repose sur la précision de positionnement angulaire des aubes par rapport au carter. A cet effet, l'accouplement entre la tige de commande et le levier d'une aube doit être précis en plus de devoir supporter des couples importants. Le réglage au montage de l'orientation entre l'axe de commande et le levier doit être particulièrement fin.

Le document US2010/0166540 A1 divulgue une turbomachine pour aéronef munie d'une section de compression. La section de compression comprend plusieurs aubes rotoriques et plusieurs aubes statoriques placées en amont des aubes rotoriques. La section de compression comporte une géométrie variable grâce à la présence d'aubes de stator pivotantes, ce qui permet de modifier la pression et la vitesse du fluide fourni aux aubes rotoriques. Les aubes pivotantes comprennent chacune un tourillon prolongé par un levier de commande. Ces leviers de commande sont liés à une bague d'actionnement commune, ce qui permet de piloter l'ensemble de la rangée d'aubes pivotantes par simple rotation de la bague d'actionnement. En outre, chaque levier présente une forme de pince en prise avec l'aube associée, ce qui limite les jeux mécaniques nuisant à la précision de commande. Toutefois, des jeux mécaniques subsistent au niveau de la bague de commande. Par ailleurs, la rotation de cette dernière génère une flexion des leviers, et donc des contraintes internes dans les leviers.

Les documents US 2014/0286745 A1, US 2016/0010486 A1 et US 2016/017744 A1 décrivent des moyens alternatifs pour commander ou limiter le pivotement des aubes, notamment à l'aide d'électro-aimants ou de piézo-électriques.

Les efforts à surmonter lors de l'actionnement du pivotement des aubes peuvent être importants eu égard au nombre d'aubes à actionner simultanément. En particulier, le frottement des pieds des aubes dans leur palier ou douille de support peut être important. Il en découle des problèmes d'usure prématurée et des difficultés pour contrôler précisément le positionnement des aubes. Par ailleurs, en début d'actionnement un pic de frottement s'oppose au mouvement des aubes.

### Résumé de l'invention

### Problème technique

L'invention a pour objectif de résoudre au moins un des problèmes posés par l'art antérieur. Plus précisément, l'invention a pour objectif d'améliorer la précision de commande d'une aube à calage variable et de limiter l'usure due au frottement du pied d'aube dans son logement.

L'invention a également pour objectif de proposer une solution simple, résistante, légère, économique, fiable, facile à produire, commode d'entretien, d'inspection aisée, et améliorant le rendement de la turbomachine.

### Solution technique

L'invention a pour objet une aube à calage avec un tourillon pour son montage dans la virole interne, et/ou un tourillon pour son montage dans la virole externe. Les termes « internes » et « externes » se rapportent à l'éloignement par rapport à l'axe de rotation du rotor de la turbomachine. La virole est une pièce comportant une paroi de forme généralement tubulaire ou conique. L'aube s'étend selon une direction principale qui est approximativement selon le rayon de la virole. Une aube à calage variable est une aube qui est montée mobile dans la virole et en particulier qui pivotera selon un axe de pivotement. L'axe de pivotement s'étend généralement selon la direction principale de l'aube.

Les expressions « aube à calage variable », « aube à orientation réglable » et « aube pivotante » sont synonymes.

Selon l'invention, le tourillon est muni d'un moyen magnétique pour guider l'aube dans son mouvement de rotation selon l'axe de pivotement. Le tourillon peut se présenter sous la forme d'un pion cylindrique d'axe l'axe de pivotement. Selon un mode de réalisation avantageux, le moyen magnétique comporte un aimant annulaire dont un des pôles est situé radialement du côté intérieur de la forme annulaire et l'autre pôle est situé radialement du côté extérieur de la forme annulaire. Alternativement, le moyen magnétique peut être formé de plusieurs aimants permanents dont les pôles identiques (par exemple Nord) pointent vers l'axe de pivotement. Dit autrement, tous les pôles Nord des aimants convergent vers l'axe de pivotement alors que tous les pôles Sud divergent. D'autres technologies électro-magnétiques équivalentes bien connues sont également envisageables.

Selon un mode de réalisation avantageux de l'invention, l'aimant est en matériau ferromagnétique de température de Curie supérieure à 300°C, notamment MnO-Fe₂O₃ ou CuO-Fe₂O₃. Ceci permet aux aimants de conserver leurs propriétés magnétiques dans les plages de fonctionnement d'un turboréacteur d'aéronef.

L'invention porte également sur une virole pouvant accueillir une telle aube. La virole selon l'invention comporte donc au moins un orifice pouvant recevoir le tourillon d'une aube à calage variable avec un moyen magnétique destiné à interagir avec le moyen magnétique de l'aube pour guide l'aube dans son mouvement de pivotement.

Selon un mode avantageux de l'invention, l'orifice est muni d'un aimant de forme annulaire dont un des pôles est situé radialement du côté intérieur de la forme annulaire et l'autre pôle est situé radialement du côté extérieur de la forme annulaire.

L'invention porte également sur un système comportant une aube et une virole, chacune munies de moyen magnétique respectif afin d'assurer la liaison pivot de l'aube dans la virole.

L'invention a également trait à un compresseur, préférentiellement à basse pression, comprenant une aube selon l'invention assemblée sur une virole selon l'invention. Les pôles de l'aimant de l'aube et de l'aimant de la virole qui sont en regard l'un de l'autre sont identiques, c'est-à-dire qu'ils sont tous les deux « Nord » ou tous les deux « Sud ». Les aimants de la virole sont donc configurés pour repousser les aimants de l'aube vers l'axe de pivotement. Ceci permet donc l'effet de repoussement entre le tourillon de l'aube et l'orifice de la virole. Ainsi, un léger jeu est créé et un centrage du tourillon dans l'orifice est réalisé. Il n'y a donc pas de contact radial entre le tourillon et la virole. Ce jeu est entrefer. L'entrefer peut être occupé par un joint d'étanchéité afin d'éviter une fuite de gaz ou liquide entre la face extérieure et la face intérieure de la virole. Le joint d'étanchéité peut être de toute forme, taille et nature qu'il soit, en particulier apte à subir de hautes températures et pression. Le joint d'étanchéité est fait d'un matériau amagnétique.

L'entrefer est autour du tourillon et/ou à l'intérieur de l'orifice.

Selon un mode avantageux de l'invention, le compresseur comprend un système de commande d'aube à orientation variable, le système de commande comprenant : un levier de commande de l'orientation de l'aube et un actionneur avec une source de champ magnétique qui définit un entrefer avec le levier de commande de sorte à pouvoir entraîner en rotation ledit levier de commande. La source de champ magnétique peut comprendre une bobine et éventuellement un noyau ferromagnétique à l'intérieur de la bobine. De manière préférée, un élément élastique est configuré pour écarter le levier de la source de champ magnétique. Le compresseur peut être adapté pour alimenter électriquement la source de champ magnétique de manière à déplacer progressivement le levier, notamment en s'opposant à l'effort exercé par l'élément élastique. Le compresseur peut comprendre un capteur d'orientation de l'aube, la source de champ magnétique étant asservie en fonction de l'orientation mesurée par le capteur.

Enfin, l'invention a également pour objet une turbomachine équipée d'un tel compresseur.

Selon un mode avantageux de l'invention, la turbomachine est un turboréacteur ou un turbopropulseur d'aéronef.

De manière générale, les modes avantageux de chaque objet de l'invention sont également applicables aux autres objets de l'invention. Dans la mesure du possible, chaque objet de l'invention est combinable aux autres objets. Les objets de l'invention sont également combinables aux modes de réalisation de la description, qui en plus sont combinables entre eux.

### Avantages apportés

L'invention permet un actionnement précis des aubes orientables. Elle réduit les frottements de contact entre l'aube et son logement dans la virole. Cette précision est atteinte d'une manière simple et économique.

### Brève description des dessins

La figure 1 représente une turbomachine axiale selon l'invention.
La figure 2 est un schéma d'un compresseur de turbomachine selon l'invention.
La figure 3 illustre un système de commande d'aubes à calage variable.
La figure 4 illustre une aube à calage variable selon l'invention.
La figure 5 illustre le palier magnétique.
La figure 6 représente une section transversale de la figure 5.
La figure 7 illustre l'aube à calage variable montée dans les viroles externes et internes du stator.

### Description des modes de réalisation

Dans la description qui va suivre, les termes interne et externe renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

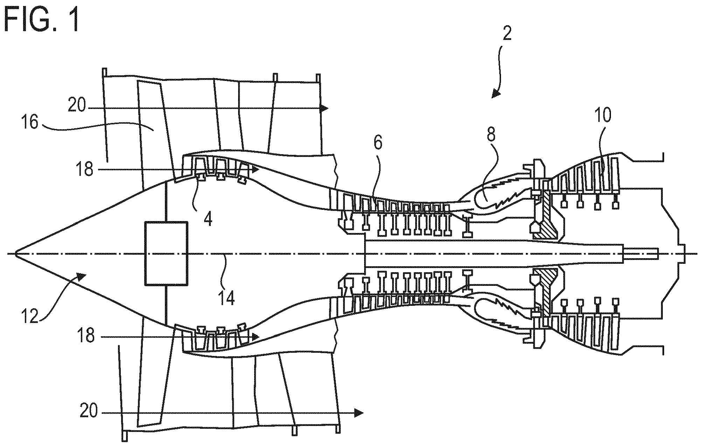

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan, ou soufflante, 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) en générant une poussée utile à la propulsion d'un avion.

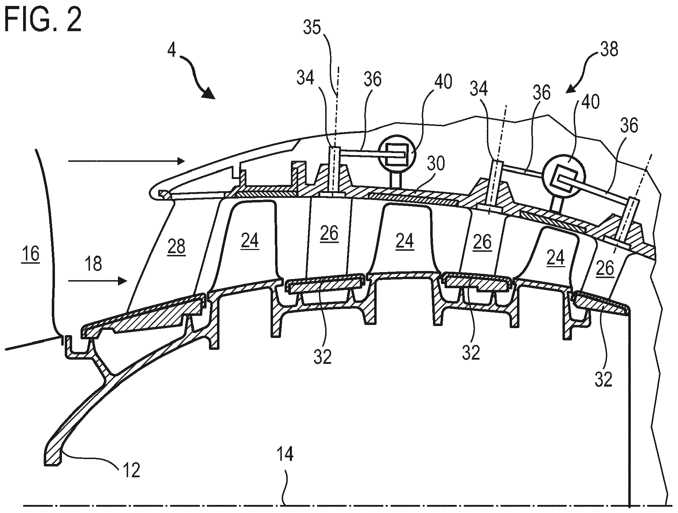

La figure 2 est une vue en coupe d'un compresseur d'une turbomachine axiale telle que celle de la figure 1. Le compresseur peut être un compresseur basse-pression 4.

Le rotor 12 comprend plusieurs rangées d'aubes rotoriques 24, en l'occurrence trois. L'inclinaison des cordes des aubes rotoriques 24 reste invariante par rapport à l'axe de rotation 14. Le compresseur basse pression 4 comprend plusieurs redresseurs, en l'occurrence quatre, qui contiennent chacun une rangée d'aubes statoriques (26 ; 28), en ce sens qu'elles sont liées au stator. Les redresseurs sont associés au fan 16 ou à une rangée d'aubes rotoriques pour redresser leurs flux d'air, de sorte à convertir la vitesse du flux en pression statique. Chaque aube, rotorique comme statorique, présente un bord d'attaque, un bord de fuite, une surface intrados et une surface extrados ; lesdites surfaces reliant le bord d'attaque au bord de fuite ; tout comme les cordes de l'aube. Dans la description qui suit, on peut se référer à une corde médiane. La surface intrados et la surface extrados délimitent la pale de l'aube correspondante.

Les aubes statoriques (26 ; 28) s'étendent essentiellement radialement depuis un carter extérieur 30. Les aubes statoriques (26 ; 28) comprennent des aubes d'entrée 28 à orientation fixe, et des aubes aval 26 à orientation réglable. Ces aubes 26 sont également connues comme aubes à calage variable, ou selon l'acronyme anglo-saxon « VSV » pour « Variable Stator Vane ». Leur particularité est que l'inclinaison de leurs cordes peut varier par rapport à l'axe de rotation 14 du compresseur 4. Leurs faces intrados et extrados peuvent être plus ou moins exposées au flux primaire 18. Les surfaces intrados s'étendent plus ou moins face au flux primaire 18 afin de moduler la déviation, et donc le redressement qui est imposé au flux 18. Les aubes orientables 26 d'une même rangée peuvent être identiques. En l'occurrence, on identifie ici trois rangées d'aubes orientables 26. Toutefois il serait possible d'implanter davantage de rangées, par exemple en rendant orientable les aubes d'entrée. Ou encore, le compresseur pourrait ne comprendre qu'une seule rangée orientable.

Les aubes orientables 26 peuvent pivoter par rapport au flux 18, si bien qu'elles couvrent plus ou moins la veine fluide grâce à leurs pales. Elles peuvent intercepter davantage le flux primaire 18. La largeur circonférentielle qu'elles occupent peut varier. Leurs bords d'attaque et leurs bords de fuite peuvent se rapprocher ou s'éloigner des aubes de la même rangée. En étant plus ou moins inclinées par rapport au sens d'écoulement général, elles dévient plus ou moins le flux primaire 18 pour moduler le redressement de flux qu'elles procurent. Ainsi, la turbomachine et le compresseur peuvent suivre différentes courbes de rendements lors du fonctionnement.

Le compresseur 4 peut comprendre des viroles internes 32 suspendues aux extrémités internes des aubes orientables 26. Afin de permettre la rotation de ces dernières, celles-ci présentent des extrémités avec des liaisons pivot ou rotule (non représentées sur la figure 2). Ainsi les aubes orientables 26 sont également inclinables par rapport aux viroles internes 32.

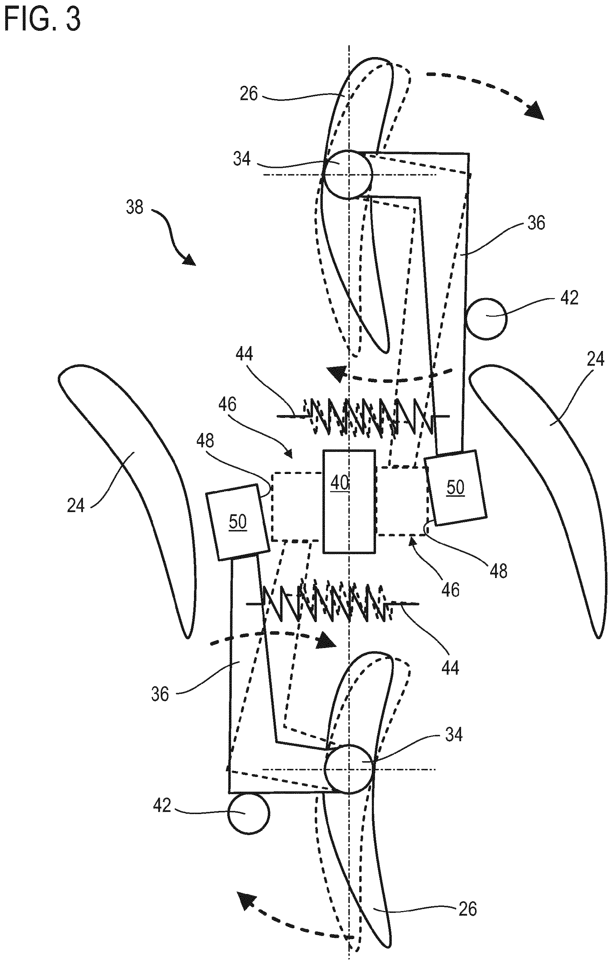

Les figures 2 et 3 décrivent une technologie de commande de l'orientation angulaire des aubes. D'autres technologies existent et peuvent être appliquées à la présente invention.

Les aubes orientables 26 sont supportées par le carter 30 via des tiges de commande 34 formant des liaisons tournantes. Des leviers 36 aux sommets des tiges 34 permettent de communiquer une rotation aux aubes orientables 26. Les orientations angulaires des aubes orientables 26 sont pilotées par un système de commande 38 coopérant avec les leviers 36. Les aubes 26 pivotent autour d'un axe de pivotement 35, propre à chaque aube 26.

Le système de commande 38 comprend au moins une source de champ magnétique 40, éventuellement plusieurs sources de champ magnétique 40 formant des actionneurs mécaniques. Chaque source 40 peut être fixée sur la surface externe du carter 30, ce qui réduit l'encombrement. Le système de commande 38 peut comprendre une source de champ magnétique 40 par aube orientable, ou une source de champ magnétique 40 pour deux aubes orientables 26. Chaque source 40 agit de manière magnétique sur un ou plusieurs leviers 36 en l'attirant ou le repoussant. Ce déplacement implique une rotation du levier 36 en question, et donc un changement d'orientation angulaire de l'aube orientable 26 correspondante.

La figure 3 esquisse une partie du système de commande 38 de la figure 2. Une rangée d'aubes rotoriques 24 est matérialisée par deux aubes 24. Le carter n'est pas représenté par soucis de clarté. Seules deux rangées d'aubes orientables 26 sont représentées par soucis de clarté. Le fonctionnement de la rangée non représentée peut aisément être déduit de ce qui suit.

Les aubes orientables 26 sont chacune mobile en rotation entre une première position dite de repos (tracée en trait plein), et une deuxième position dite position active (tracée en trait pointillée). Elles pivotent sur elles-mêmes grâce à leurs tiges de commande 34. Dans la première position, les aubes orientables 26 peuvent être contre des butées angulaires 42, par exemples formées sur le carter. Elles peuvent y être maintenues grâce à des éléments élastiques 44, tels des ressorts, si bien qu'elles peuvent être auto-stables.

Les leviers 36 peuvent être généralement parallèles aux cordes des aubes orientables 26. Dans la première position, les leviers 36 ménagent des entrefers 46 avec la source 40. En particulier, les leviers 36 présentent des faces 48 en regard de la source 40, lesdites faces 48 délimitant les entrefers 46. Ces faces 48 peuvent être formées sur des surépaisseurs 50 des leviers 36. Les surépaisseurs 50 augmentent les surfaces utiles des entrefers 46, ce qui accroit l'efficacité du système. Lorsque la source 40 est alimentée électriquement, le champ magnétique produit dans les entrefers 46 attire les leviers 36, si bien que les entrefers 36 se referment, et les faces 48 viennent en contact et donc en butée contre la source 40. Les aubes orientables 26 viennent donc en butée contre leurs sources 40.

Chaque source de champ magnétique 40 peut comprendre une bobine d'induction, et optionnellement un noyau ferromagnétique à l'intérieur de la bobine. Ceci augmente le champ magnétique communiqué aux leviers 36. Lorsque la source de champ magnétique 40 est alimentée électriquement, elle produit un champ qui attire les deux leviers 36 en faisant tourner les aubes orientables 26 dans le même sens.

Il peut être opportun d'orienter les aubes orientables 26 selon leur première position au décollage d'un aéronef grâce à l'alimentation des sources 40, puis de couper leur alimentation en vol de croisière ; ce qui optimise la consommation générale du turboréacteur.

Dans le présent mode de réalisation, la source 40 permet de commander deux aubes orientables 26. Pour ce faire, la source 40 est placée au niveau axialement d'une rangée d'aubes rotoriques 24, ce qui permet de réaliser un montage compact radialement.

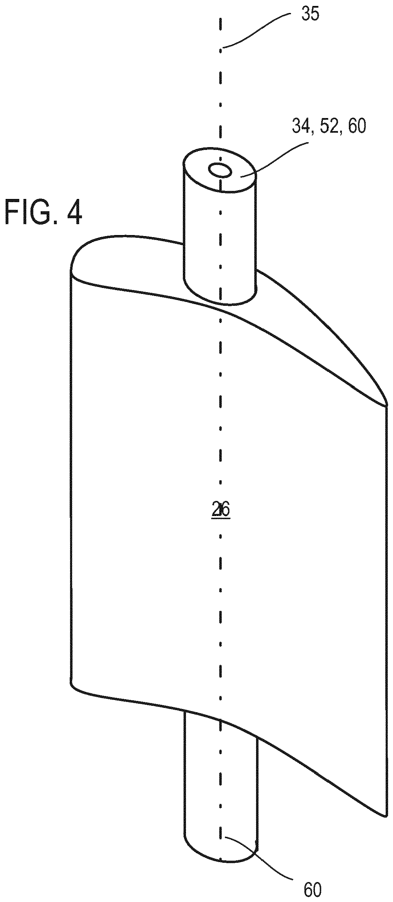

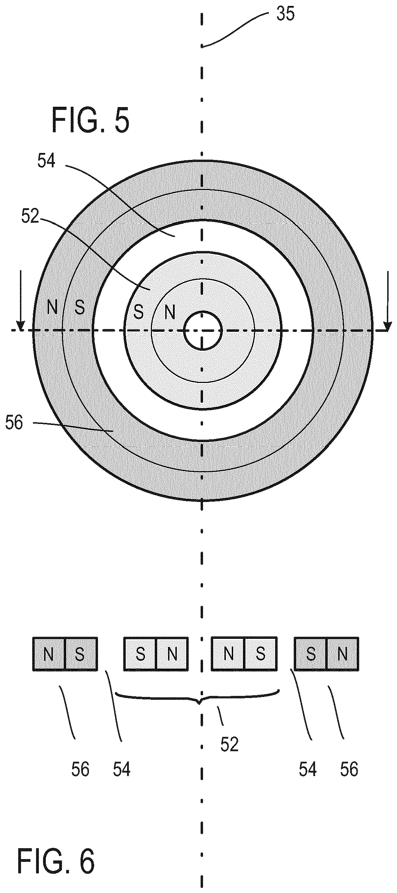

La figure 4 représente une aube statorique 26 munie de deux tourillons 60 pour le montage de l'aube dans les viroles interne 32 et externe 30. Le tourillon externe 60 peut ne former qu'un avec la tige de commande 34. Alternativement, la tige de commande 34 peut être fixée à l'extrémité externe du tourillon 60. Selon un mode préféré de l'invention, au moins l'un de ces tourillons 60 comporte ou consiste en un aimant annulaire 52. Dans l'axe du tourillon 60, l'aimant s'étend au moins sur une distance correspondant à l'épaisseur de la virole, afin d'assurer la fonction de liaison sur toute l'épaisseur de la virole. L'aube 26 est positionnée dans les viroles 30, 32. La douille de la virole 30, 32 qui reçoit le tourillon magnétique comporte également un aimant annulaire 56 (sur les figures 5 à 7).

Comme représenté en figure 5 dans une vue de dessus du tourillon 60 externe, les aimants respectifs 52 et 54 sont tels que les pôles en regard sont identiques et assurent donc un repoussement respectif de la douille et du tourillon. La figure 5 met en évidence un entrefer 54 (exagéré sur la figure) qui est un jeu entre les deux aimants 52, 56. C'est cette absence de contact entre la douille et le tourillon qui confère à la liaison entre la virole et l'aube son faible frottement. L'entrefer peut préférentiellement accueillir un joint d'étanchéité (non représenté). D'autres moyens mécaniques, éventuellement magnétiques, peuvent être employés pour maintenir l'aube radialement par rapport à la virole et/ou au carter.

La figure 6 représente une section dans un plan transversal de la position des pôles décrite en figure 5.

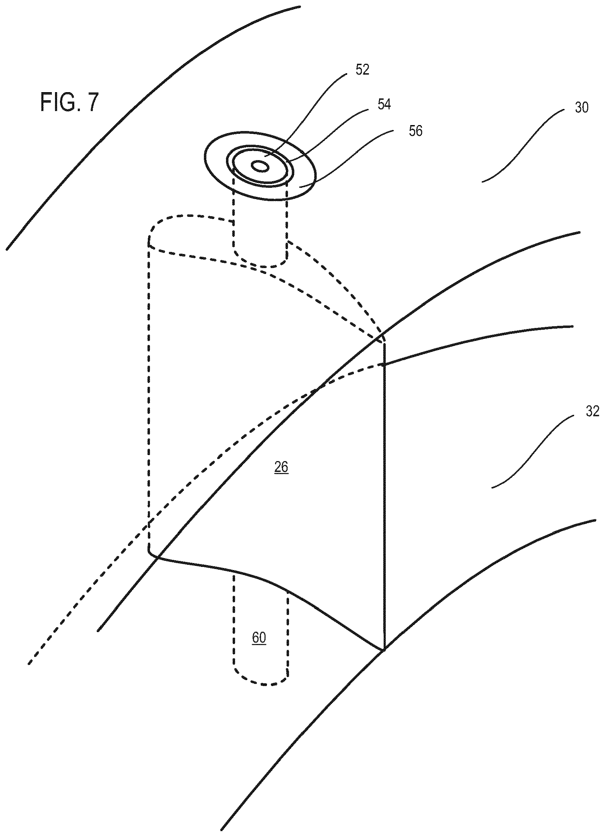

Dans un mode de réalisation non représenté, au moins l'un des moyens magnétiques, c'est-à-dire côté virole ou côté tourillon, peut être réalisé par plusieurs aimants permanents répartis sur la circonférence du tourillon ou de l'orifice. Lorsque les deux moyens magnétiques sont réalisés de la sorte, il existe des positions angulaires privilégiées ou points durs. Les aimants seront donc positionnés tels que ces points durs coïncident avec des orientations de l'aube particulièrement utiles (par exemple les positions angulaires extrêmes). La figure 7 illustre schématiquement une aube 26 selon l'invention montée dans une virole 30 selon l'invention. Les aimants 52 et 56 ne sont représentés que sur la virole externe. Alternativement ou conjointement, l'accouplement avec la virole interne peut aussi être magnétique. Sur la figure 7, la tige de commande qui permet le réglage de l'orientation de l'aube n'est pas représentée.

Le domaine d'application privilégié des aubes selon l'invention est l'aéronautique. Il conviendra donc en particulier de choisir le matériau des aimants parmi des matériaux dont la température de Curie - c'est-à-dire la température maximale jusqu'à laquelle les propriétés magnétiques sont conservées - est supérieure ou égale à 300°C. Bien entendu, des combinaisons de matériaux de ce type sont possibles. Quelques exemples de matériaux de ce type sont présentés dans le tableau ci-dessous :

| Matériau | Température de Curie (°C) | Matériau | Température de Curie (°C) |
|---|---|---|---|
| MnO-Fe2O3 | 300 | Iron(II,III) oxide (FeOFe2O3) | 585 |
| Neodymium magnets | 310-400 | NiO-Fe2O3 | 585 |
| Manganese antimonide (MnSb) | 314 | Iron(III) oxide (Fe2O3) | 675 |
| Nickel (Ni) | 354 | Alnico | 700-860 |
| Manganese bismuthide (MnBi) | 357 | Samarium-cobalt magnets | 720-800 |
| MgO-Fe2O3 | 440 | Iron (Fe) | 770 |
| Strontium ferrite | 450 | Cobalt (Co) | 1127 |
| CuO-Fe2O3 | 455 | | |

## Revendications

1. Aube (26) à calage variable de turbomachine, ladite aube comprenant :
- un axe de pivotement (35) selon lequel le calage de l'aube varie ;
- au moins un tourillon (60) s'étendant selon l'axe de pivotement (35) et prévu pour le montage de l'aube (26) dans une virole (30, 32), **caractérisée en ce que** le tourillon (60) est muni de moyens magnétiques (52) pour guider l'aube (26) en rotation selon son axe de pivotement (35).

2. Aube selon la revendication 1, les moyens magnétiques se présentant soit sous la forme d'un aimant permanent (52) de forme annulaire dont un des pôles est situé radialement du côté intérieur de la forme annulaire et l'autre pôle est situé radialement du côté extérieur de la forme annulaire,
soit sous la forme d'une pluralité d'aimants permanents répartis autour de l'axe de pivotement (35), les aimants comprenant éventuellement des pôles identiques disposés en regard de l'axe de pivotement (35) de l'aube (26).

3. Aube selon l'une des revendications précédentes, les pôles du moyen magnétique (52) étant coplanaire dans un plan perpendiculaire à l'axe de pivotement (35).

4. Aube selon l'une des revendications précédentes, comprenant un deuxième tourillon (60) muni d'un deuxième moyen magnétique (52) pour guider l'aube en rotation selon son axe de pivotement (35) dans une deuxième virole (30, 32) ou un carter.

5. Aube selon l'une des revendications précédentes, le moyen magnétique comprenant un ou plusieurs aimant(s) permanent(s) en matériau ferromagnétique de température de Curie supérieure à 300°C, notamment MnO-Fe₂O₃ ou CuO-Fe₂O₃.

6. Virole (30, 32) de turbomachine comprenant une paroi annulaire adaptée pour guider un flux annulaire de turbomachine, la paroi annulaire étant de forme générale tubulaire ou conique et comprenant un orifice muni d'un axe de pivotement (35) et pouvant recevoir le tourillon (60) d'une aube (26) à calage variable, **caractérisée en ce que** l'orifice est muni d'un moyen magnétique (56) pour guider l'aube (26) en rotation selon l'axe de pivotement (35), l'aube étant notamment conforme à l'une des revendications 1 à 5.

7. Virole selon la revendication 6, le moyen magnétique étant
soit un aimant (56) de forme annulaire dont un des pôles est situé radialement du côté intérieur de la forme annulaire et l'autre pôle est situé radialement du côté extérieur de la forme annulaire,
soit une pluralité d'aimants permanents répartis autour de l'axe de pivotement (35), les aimants comprenant des pôles identiques disposés en regard de l'axe de pivotement (35) de l'aube (26).

8. Système d'aubes à orientation variable par rapport à l'axe de rotation d'une turbomachine, ledit système comprenant une aube (26) à orientation variable avec un tourillon (60), et une virole (30, 32) avec un orifice dans lequel le tourillon (60) est monté de manière pivotante afin de former une liaison pivot ; **caractérisé en ce que** ladite liaison pivot comprend un palier magnétique (52, 54, 56) comprenant préférentiellement un aimant permanent (52, 56) ou une source électrique de champ magnétique.

9. Compresseur (4), préférentiellement à basse pression, **caractérisé en ce qu'**il comprend un système selon la revendication 8, la virole (30, 32) pouvant être une virole interne (32) ou une virole externe (30), les pôles des aimants de l'aube et de la virole (52, 56) étant préférentiellement tels que les pôles en regard soient identiques.

10. Compresseur (4) selon la revendication 9, comprenant un système de commande (38) d'aube à orientation variable, le système de commande (38) comprenant :
- un levier de commande (36) de l'orientation de l'aube (26) ;
- et un actionneur avec une source de champ magnétique (40) qui définit un entrefer (46) avec le levier de commande (36) de sorte à pouvoir entraîner en rotation ledit levier de commande (36).

11. Compresseur (4) selon la revendication 10 **caractérisé en ce que** la source de champ magnétique (40) comprend une bobine et éventuellement un noyau ferromagnétique à l'intérieur de la bobine, et préférentiellement un élément élastique (44) configuré pour écarter le levier (36) de la source de champ magnétique (40).

12. Compresseur selon l'une des revendications 10 ou 11, **caractérisé en ce qu'**il est adapté pour alimenter électriquement la source de champ magnétique de manière à déplacer progressivement le levier (36), notamment en s'opposant à l'effort exercé par l'élément élastique.

13. Compresseur selon l'une des revendications 10 à 12, **caractérisé en ce qu'**il comprend un capteur d'orientation de l'aube, la source de champ magnétique (40) étant asservie en fonction de l'orientation mesurée par le capteur.

14. Compresseur selon l'une des revendications 10 à 13, comprenant un entrefer (54) circulaire entre le ou les aimants de l'aube (26) et le ou les aimants de la virole (30, 32), l'entrefer (54) accueillant un joint d'étanchéité autour du tourillon (60), préférentiellement du côté de l'axe de rotation du compresseur (4).

15. Turbomachine, en particulier turboréacteur ou turbopropulseur d'aéronef **caractérisée en ce qu'**elle comprend une aube (26) selon l'une des revendications 1 à 5 et/ou une virole (30, 32) selon l'une des revendications 6 ou 7 et/ou un compresseur (4) selon l'une des revendications 9 à 14.

## Patentansprüche

1. Verstellbares Schaufelblatt (26) einer Turbomaschine, wobei das Schaufelblatt Folgendes umfasst:
- eine Schwenkachse (35), gemäß der sich die Stellung des Schaufelblattes ändert;
- mindestens einen Zapfen (60), der sich entlang der Schwenkachse (35) erstreckt und zum Befestigen des Schaufelblattes (26) an einem Klemmring (30, 32) vorgesehen ist, **dadurch gekennzeichnet, dass** der Zapfen (60) mit einer Magnetvorrichtung (52) versehen ist, um die Rotation des Schaufelblattes (26) um seine Schwenkachse (35) zu führen.

2. Schaufelblatt nach Anspruch 1, wobei die Magnetvorrichtungen entweder in Form eines ringförmigen Permanentmagneten (52) sind, bei dem einer der Pole radial an der Innenseite der Ringform angeordnet ist und der andere Pol radial an der Außenseite der Ringform angeordnet ist,
oder in Form mehrerer Permanentmagnete, die um die Schwenkachse (35) verteilt sind, wobei die Magnete möglicherweise identische Pole aufweisen, die gegenüber der Schwenkachse (35) des Schaufelblattes (26) angeordnet sind.

3. Schaufelblatt nach einem der vorhergehenden Ansprüche, wobei die Pole der Magnetvorrichtung (52) koplanar in einer Ebene senkrecht zur Schwenkachse (35) sind.

4. Schaufelblatt nach einem der vorhergehenden Ansprüche, mit einem zweiten Zapfen (60), der mit einer zweiten Magnetvorrichtung (52) versehen ist, um das Schaufelblatt in einem zweiten Klemmring (30, 32) oder in einem Kurbelgehäuse bei der Drehung um seine Schwenkachse (35) zu führen.

5. Schaufelblatt nach einem der vorhergehenden Ansprüche, wobei die Magnetvorrichtung einen oder mehrere Permanentmagnete aus ferromagnetischem Material umfasst, das eine Curie-Temperatur von mehr als 300 °C hat, wobei MnO-Fe2O3 oder CuO-Fe2O3 besonders hervorzuheben sind.

6. Klemmring (30, 32) einer Turbomaschine mit einer ringförmigen Wand, die zum Führen eines ringförmigen Turbomaschinen-Stromes geeignet ist, wobei die ringförmige Wand im Allgemeinen rohrförmig oder konisch geformt ist und eine Öffnung aufweist, die mit einer Schwenkachse (35) versehen ist und den Zapfen (60) eines verstellbaren Schaufelblattes (26) aufnehmen kann, **dadurch gekennzeichnet, dass** die Öffnung mit Magnetvorrichtung (56) zum Führen des Schaufelblattes (26) bei der Drehung um die Drehachse (35) versehen ist, wobei das Schaufelblatt insbesondere entsprechend einem der Ansprüche 1 bis 5 ausgeführt ist.

7. Klemmring nach Anspruch 6, wobei die Magnetvorrichtung entweder ein Magnet (56) in Ringform ist, bei dem einer der Pole radial an der Innenseite der Ringform angeordnet ist und der andere Pol radial an der Außenseite der Ringform angeordnet ist oder eine Vielzahl von Permanentmagneten, die um die Schwenkachse (35) verteilt sind, wobei die Magnete identische Pole aufweisen, die gegenüber der Schwenkachse (35) des Schaufelblattes (26) angeordnet sind.

8. Schaufelblattsystem mit variabler Ausrichtung in Bezug auf die Drehachse einer Turbomaschine, wobei das System ein Schaufelblatt (26) mit variabler Ausrichtung mit einem Zapfen (60) und einen Klemmring (30, 32) mit einer Öffnung umfasst, in der der Zapfen (60) schwenkbar gelagert ist, um eine Schwenkverbindung zu bilden; **dadurch gekennzeichnet, dass** diese Schwenkverbindung ein Magnetlager (52, 54, 56) umfasst, das vorzugsweise einen Permanentmagneten (52, 56) oder eine elektrische Magnetfeldquelle umfasst.

9. Kompressor (4), vorzugsweise ein Niederdruck-Kompressor, **dadurch gekennzeichnet, dass** er ein System nach Anspruch 8 umfasst, wobei der Klemmring (30, 32) ein innerer Klemmring (32) oder ein äußerer Klemmring (30) sein kann, und wobei die Magnetpole des Schaufelblattes und des Klemmrings (52, 56) vorzugsweise so sind, dass gegenüberliegende Pole identisch sind.

10. Kompressor (4) nach Anspruch 9, der ein Steuersystem (38) für ein Schaufelblatt mit variabler Ausrichtung umfasst, wobei das Steuersystem (38) Folgendes umfasst:
- einen Steuerhebel (36) zur Ausrichtung des Schaufelblattes (26);
- und einen Aktuator mit einer Magnetfeldquelle (40), die mit dem Steuerhebel (36) einen Luftspalt (46) definiert, sodass dieser Steuerhebel (36) drehbar ist.

11. Kompressor (4) nach Anspruch 10, **dadurch gekennzeichnet, dass** die Magnetfeldquelle (40) eine Spule und möglicherweise einen ferromagnetischen Kern innerhalb der Spule und vorzugsweise ein elastisches Element (44) umfasst, das dazu konfiguriert ist, den Hebel (36) von der Magnetfeldquelle (40) zu entfernen.

12. Kompressor nach einem der Ansprüche 10 oder 11, **dadurch gekennzeichnet, dass** er dazu ausgelegt ist, die Magnetfeldquelle elektrisch zu versorgen, um den Hebel (36) schrittweise zu bewegen, insbesondere indem er der vom elastischen Element ausgeübten Kraft entgegenwirkt.

13. Kompressor nach einem der Ansprüche 10 bis 12, **dadurch gekennzeichnet, dass** er einen Ausrichtungssensor für das Schaufelblatt aufweist, wobei die Magnetfeldquelle (40) gemäß der vom Sensor gemessenen Ausrichtung nachgeführt wird.

14. Kompressor nach einem der Ansprüche 10 bis 13, umfassend einen kreisförmigen Spalt (54) zwischen dem oder den Magneten des Schaufelblattes (26) und dem oder den Magneten des Klemmringes (30, 32) wobei der Spalt (54) eine Dichtung um den Zapfen (60) herum, vorzugsweise auf der Seite der Drehachse des Kompressors (4) aufnimmt.

15. Turbomaschine, insbesondere Turbinenstrahl- oder Turboprop-Triebwerk eines Flugzeuges, **dadurch gekennzeichnet, dass** sie ein Schaufelblatt (26) nach einem der Ansprüche 1 bis 5 und/oder einen Klemmring (30, 32) nach einem der Ansprüche 6 oder 7 aufweist und/oder einen Kompressor (4) nach einem der Ansprüche 9 bis 14.

## Claims

1. A variable-pitch blade (26) for a turbomachine, said blade comprising:
- a pivot axis (35) according to which the pitch of the blade varies;
- at least one trunnion (60) extending along the pivot axis (35) and provided for mounting the blade (26) in a ferrule (30, 32), **characterised in that** the trunnion (60) is equipped with magnetic means (52) for guiding the blade (26) in rotation along its pivot axis (35).

2. The blade according to claim 1, the magnetic means being either in the form of a permanent magnet (52) of annular shape, of which one of the poles is located radially on the inner side of the annular shape and the other pole is located radially on the outer side of the annular shape,
or in the form of a plurality of permanent magnets distributed around the pivot axis (35), the magnets possibly comprising identical poles arranged opposite the pivot axis (35) of the blade (26).

3. The blade according to any one of the preceding claims, the poles of the magnetic means (52) being coplanar in a plane perpendicular to the pivot axis (35).

4. The blade according to any one of the preceding claims, comprising a second trunnion (60) equipped with a second magnetic means (52) for guiding the blade (26) in rotation along its pivot axis (35) in a second ferrule (30, 32) or a housing.

5. The blade according to any one of the preceding claims, the magnetic means comprising one or a plurality of permanent magnets of ferromagnetic material with Curie temperature greater than 300°C, in particular MnO-Fe₂O₃ or CuO-Fe₂O₃.

6. A ferrule (30, 32) for a turbomachine comprising an annular wall adapted to guide an annular flow of the turbomachine, the annular wall being of generally tubular or conical shape and comprising an orifice equipped with a pivot axis (35) and able to receive the trunnion (60) of a variable-pitch blade, **characterised in that** the orifice is equipped with a magnetic means (56) for guiding the blade (56) in rotation along the pivot axis (35), the blade being in particular in accordance with any one of claims 1 to 5.

7. The ferrule according to claim 6, the magnetic means being
either a magnet (56) of annular shape, of which one of the poles is located radially on the inner side of the annular shape and the other pole is located radially on the outer side of the annular shape, or a plurality of permanent magnets distributed around the pivot axis (35), the magnets comprising identical poles arranged opposite the pivot axis (35) of the blade (26).

8. A blade system with variable orientation relative to the axis of rotation of a turbomachine, said system comprising a blade (26) of variable orientation with a trunnion (60), and a ferrule (30, 32) with an orifice in which the trunnion (60) is pivotally mounted to form a pivot connection; **characterised in that** said pivot connection comprises a magnetic bearing (52, 54, 56) preferably comprising a permanent magnet (52, 56) or an electric magnetic field source.

9. A compressor (4), preferably at low pressure, **characterised in that** it comprises a system according to claim 8, the ferrule (30, 32) being able to be an inner ferrule (32) or an outer ferrule (30), the poles of the magnets of the blade and the ferrule (52, 56) being preferably such that the opposite poles are identical.

10. The compressor (4) according to claim 9, comprising a variable orientation blade control system (38), the control system (38) comprising:
a control lever (36) for the orientation of the blade (26);
and an actuator with a magnetic field source (40) which defines an air gap (46) with the control lever (36) so as to be able to rotate said control lever (36).

11. The compressor (4) according to claim 10, **characterised in that** the magnetic field source (40) comprises a coil and possibly a ferromagnetic core inside the coil, and preferably an elastic element (44) configured to move the lever (36) away from the magnetic field source (40).

12. The compressor according to any one of claims 10 or 11, **characterised in that** it is adapted to supply electricity to the magnetic field source so as to progressively move the lever (36), in particular opposing the force exerted by the elastic element.

13. The compressor according to any one of claims 10 to 12, **characterised in that** it comprises a blade orientation sensor, the magnetic field source (40) being subservient to the orientation measured by the sensor.

14. The compressor according to any one of claims 10 to 13, comprising a circular air gap (54) between the magnet or magnets of the blade (26) and the magnet or magnets of the ferrule (30, 32), the air gap (54) receiving a seal around the trunnion (60), preferably on the side of the axis of rotation of the compressor (4).

15. A turbomachine, in particular an aircraft turbojet or turboprop, **characterised in that** it comprises a blade (26) according to any one of claims 1 to 5 and/or a ferrule (30, 32) according to any one of claims 6 or 7 and/or a compressor (4) according to any one of claims 9 to 14.
